(19) Europäisches Patentamt
European Patent Office
Office européen des brevets

(11) Veröffentlichungsnummer: **0 263 910**
**B1**

(12) # EUROPÄISCHE PATENTSCHRIFT

(45) Veröffentlichungstag der Patentschrift: **22.03.89**

(51) Int. Cl.4: **C22B 7/00**, C22B 11/04, C01B 19/00

(21) Anmeldenummer: **86890278.4**

(22) Anmeldetag: **13.10.86**

(54) **Hydrometallurgisches Verfahren zur Abtrennung und Anreicherung von Gold, Platin und Palladium, sowie Gewinnung von Selen aus dem Anodenschlamm der Kupferelektrolysen und ähnlicher nichtmetallischer Stoffe.**

(43) Veröffentlichungstag der Anmeldung: **20.04.88 Patentblatt 88/16**

(45) Bekanntmachung des Hinweises auf die Patenterteilung: **22.03.89 Patentblatt 89/12**

(84) Benannte Vertragsstaaten: **BE DE ES FR GB IT NL SE**

(56) Entgegenhaltungen:
**EP-A- 0 049 169**
**EP-A- 0 176 100**
**DD-A- 117 481**
**DE-A- 2 517 932**
**DE-A- 3 145 006**
**DE-B- 1 199 002**
**US-A- 4 497 659**

(73) Patentinhaber: **Austria Metall Aktiengesellschaft, A-5282 Braunau am Inn(AT)**

(72) Erfinder: **Bertha, Josef, Faberstrasse 29d, A-6230 Brixlegg(AT)**
Erfinder: **Wallner, Jörg, Dipl.-Ing., Faberstrasse 27b, A-6230 Brixlegg(AT)**
Erfinder: **Wörz, Helmut, Dipl.-Ing., Herrenhausplatz 1, A-6230 Brixlegg(AT)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Der in den Kupferelektrolysen anfallende Anodenschlamm enthält neben Silber beachtliche Mengen an Gold, Palladium, Platin, Selen und in geringen Mengen auch Rhodium und Ruthenium.

Das Ziel dieser Erfindung ist die Abtrennung und Anreicherung von Gold, Platin und Palladium, sowie die Gewinnung von Selen.

Die heute üblichen Verfahren zur Aufbereitung des Anodenschlammes und Gewinnung der Wertmetalle kombinieren pyrometallurgische und hydrometallurgische Verfahren.

Der erste Verfahrensschritt ist meist die oxydierende Röstung bei 200–400°C. Die Röstung erfolgt in dünner Schicht oder in Trommelöfen unter Luftzufuhr. Die Selenide und Telluride von Kupfer und Silber setzen sich zu den Seleniten und Telluriten um. Geringe Anteile an $SeO_2$ verflüchtigen sich.

Selen und Tellur werden durch eine alkalische Laugung aus dem Schlamm extrahiert und Selen durch $SO_2$ in saurer Lösung als Rohselen gefällt.

Aus dem Laugungsrückstand wird im Doréofen das sogenannte Dorémetall, eine Silber-Kupfer-Gold-Legierung, gewonnen, das in der Silberelektrolyse eingesetzt wird. An der Anode der Silberelektrolyse scheiden sich die Platinmetalle und das Gold als Anodenschlamm ab. Dieser Schlamm wird nach einer Vorreinigung zu Anoden vergossen und das Gold elektrochemisch abgeschieden, während die Platinmetalle nach Anreicherung im Goldelektrolyten durch chemische Verfahren abgetrennt und gewonnen werden.

Dieses konventionelle Verfahren ist sehr zeit- und energieaufwendig, bedingt durch die Röst- und Schmelzarbeiten sind auch noch hohe Edelmetall- und Selenverluste zu erwarten und außerdem ist die Verarbeitungsart nicht umweltfreundlich. Als Nachteil ist noch zu erwähnen, daß relativ große Goldmengen durch die Goldelektrolyse zeitmäßig sehr lange gebunden sind.

Demgegenüber ist das Ziel der Erfindung ein umweltfreundliches Verfahren zur Abtrennung und Anreicherung von Gold, Platin und Palladium, sowie die Gewinnung von Selen aus dem Anodenschlamm und ähnlichen Materialien, das eine möglichst vollständige Abtrennung dieser Metalle mit gutem Ausbringen und geringem Energie- und Chemikalienaufwand ermöglicht. Diese Aufgabe wurde wie folgt gelöst:

Verfahrensbeschreibung:

Durch die Chlorierung des Anodenschlammes mit Chlor, Salzsäure oder anderen Chlorierungsverfahren werden neben Kupfer und Nickel die Platinmetalle, das Gold und Selen quantitativ gelöst.

Der Chlorierungsrückstand enthält das gesamte Silber als Silberchlorid, AgCl. Aus diesem Filterrückstand wird das Silber nach einem der bekannten pyro- oder hydrometallurgischen Verfahren gewonnen.

Im salzsauren Filtrat der Verfahrensstufe "Chlorieren" erfolgt nun die selektive Abtrennung der Platinmetalle und Gold von Selen und Tellur. Dabei oxydiert man die in Lösung vorhandenen $Se^{IV}$- und $Te^{IV}$-Verbindungen bei Zimmertemperatur mit $Cl_2$-Gas und erhält beide Verbindungen in ihrer 6-wertigen Form.

Reaktionsgleichung:

$$2\ Se^{IV}O_3^{2-} + \underset{(Cl_2)}{O_2} \underset{\text{Wärme}}{\overset{\text{Normaltemp.}}{\rightleftarrows}} 2\ Se^{VI}O_4^{2-} \qquad (1)$$

Die selektive Trennung der Platinmetalle und Gold von Selen erreicht man durch Versetzen der Reaktionslösung mit geeigneten Reduktionsmitteln, wie z.B. Natrium- oder Kaliumkupfer (I)-chlorid, $Me^{I}(Cu^{I}Cl_2)$, oder Kupfer- bzw. Bronzestaub oder CuCl usw., die alle die genannten Edelmetalle bei Zimmertemperatur quantitativ ausfällen, $Se^{VI}$ und $Te^{VI}$ aber nicht zu reduzieren vermögen.

Reaktionsgleichungen:

$Au^{+++} + 3\ Cu^{+} \rightarrow Au^{\circ} + 3\ Cu^{++}$ (2)
$Pd^{++} + 2\ Cu^{+} \rightarrow Pd^{\circ} + 2\ Cu^{++}$ (3)
$Pt^{++} + 2\ Cu^{+} \rightarrow Pt^{\circ} + 2\ Cu^{++}$ (4)

Während $Au^{+++}$ durch die angeführten Reduktionsmittel sofort und quantitativ gefällt wird, benötigen die Platinmetalle zu dieser Art der Ausfällung in salzsaurer Lösung einen Kollektor, und zwar wird der Lösung eine definierte Menge an $Se^{IV}$ beigegeben. Diese Zugabe ergibt erst eine quantitative reduktive Mitfällung der Platinmetalle an Selen. Die zugesetzte Selenmenge soll ungefähr gleich der Menge der gesamten in der Lösung vorhandenen Platinmetalle sein. In der Praxis entspricht diese Selenmenge ca. 1–2% der insgesamt durch den Anodenschlamm eingebrachten Selenmenge.

Die separate $Selen^{IV}$-Zugabe kann vermieden werden, wenn man die Umkehrreaktion der Reaktionsgleichung (1) in der Praxis gezielt nützt.

| Zusammensetzung der Edelmetallfällung (Beispiel): | | | |
|---|---|---|---|
| 40% Au | 2,8% Pt | | (1) |
| 25% Pd | 2,5% Cu | Rest = Selen | |

| Analyse des eingesetzten Anodenschlammes (Beispiel): | | | |
|---|---|---|---|
| 4,52% Ag | 2,5% Se | 0,21% Te | |
| 220 ppm Au | 2,8% Cu | | (2) |
| 138 ppm Pd | 1,8% Ni | | |
| 15 ppm Pt | 35% Pb | | |

Das obige Edelmetall-Zementat wird nach einem der bekannten elektrochemischen oder hydrometallurgischen Verfahren weiterverarbeitet.

Im Filtrat der Edelmetallfällung findet sich neben Restgehalten an Kupfer und Nickel die Hauptmenge an Selen. Zur Abtrennung und Gewinnung dieses Metalles wird die salzsaure Lösung längere Zeit erhitzt, wobei sich $Se^{VI}$ in $Se^{IV}$ umwandelt. In dieser Wertigkeitsstufe ist das Selen mit den oben angeführten Reduktionsmitteln reduzierbar.

Reaktionsgleichungen:

$$H_2Se^{VI}O_4 + 2\ HCl \xrightarrow{\text{Hitze}} H_2Se^{IV}O_3 + H_2O + Cl_2 \qquad (5)$$

$$H_2Se^{IV}O_3 + 4\ Cu^{+}Cl + 4\ HCl \longrightarrow Se + 3\ H_2O + 4\ CuCl_2 \qquad (6)$$

Der schwarze, kristalline Selenniederschlag wird filtriert und getrocknet. Reinheit: $\geqslant$ 99,5% Se. Verunreinigungen: Cu, Pb, Te und Spuren von Edelmetallen.

Das Filtrat der Selenfällung wird in der Abwasseraufbereitung mit Hydrakalk behandelt, wobei durch den hohen $Cu^{++}/Cu^{+}$-Anteil begünstigt nur mehr Spuren an Schwermetall-Ionen im erhaltenen Abwasser enthalten sind.

Beispiel:

Anodenschlamm: Zusammensetzung siehe Analysenaufstellung (2)

125 kg entkupferter Anodenschlamm (20% Nässe = 100 kg Trockenschlamm) wurden mit Wasser gut suspendiert und dann bei Zimmertemperatur mit $Cl_2$/HCl chloriert. Nach der Abtrennung des Rückstandes konnten 150 l Filtrat (+ Waschwasser) mit folgender Zusammensetzung erhalten werden:

| | | | | |
|---|---|---|---|---|
| HCl: ca. | 30 g/l | Pt: | 10 ppm | |
| Au: | 147 ppm | Se: | 16 g/l | (3) |
| Pd: | 92 ppm | | | |

Die Nachchlorierung der Lösung zur Aufoxidation des $Se^{IV}$ zu $Se^{VI}$ erfolgte unter Rühren bei Zimmertemperatur. Um die Edelmetalle quantitativ auszufällen, muß die Zugabe des Reduktionsmittels in zwei Teilen vorgenommen werden:

1) Ein Drittel des Reduktionsmittels sofort nach der Nachchlorierung: Überschüssiges Chlor wird gebunden und die Hauptmenge Gold ausgefällt.

2) Dann setzt man eine definierte Menge $Se^{IV}$-Lösung (erhalten durch kurzzeitiges Kochen von 2 l Filtrat) und dann den Rest des Reduktionsmittels langsam zu, bis der Pd-Gehalt der Lösung auf 0,5 ppm abgesunken ist. Verbrauch: 350 g Bronzestaub (80% Cu, 20% Zn). Nach 10 Minuten Rührzeit konnte filtriert werden.

Zusammensetzung des Zementates: siehe Analysenaufstellung (1)

Um das Selen aus dem Filtrat der Zementatfiltration ausfällen zu können, muß eine Reduktion des $Se^{VI}$ zu $Se^{IV}$ vorgenommen werden. Dies geschah durch Versetzen der Lösung mit 10 l Salzsäure (1,18) und Erhitzen auf ca. 80–85°C. Schon nach kurzer Zeit konnte das Reduktionsmittel langsam zugegeben werden und in ein halben Stunde war das Selen als schwarzer kristalliner Niederschlag quantitativ ausgefällt. Verbrauch: 6,7 kg Bronzestaub.

Reinheit des Selens: ≥ 99,5%

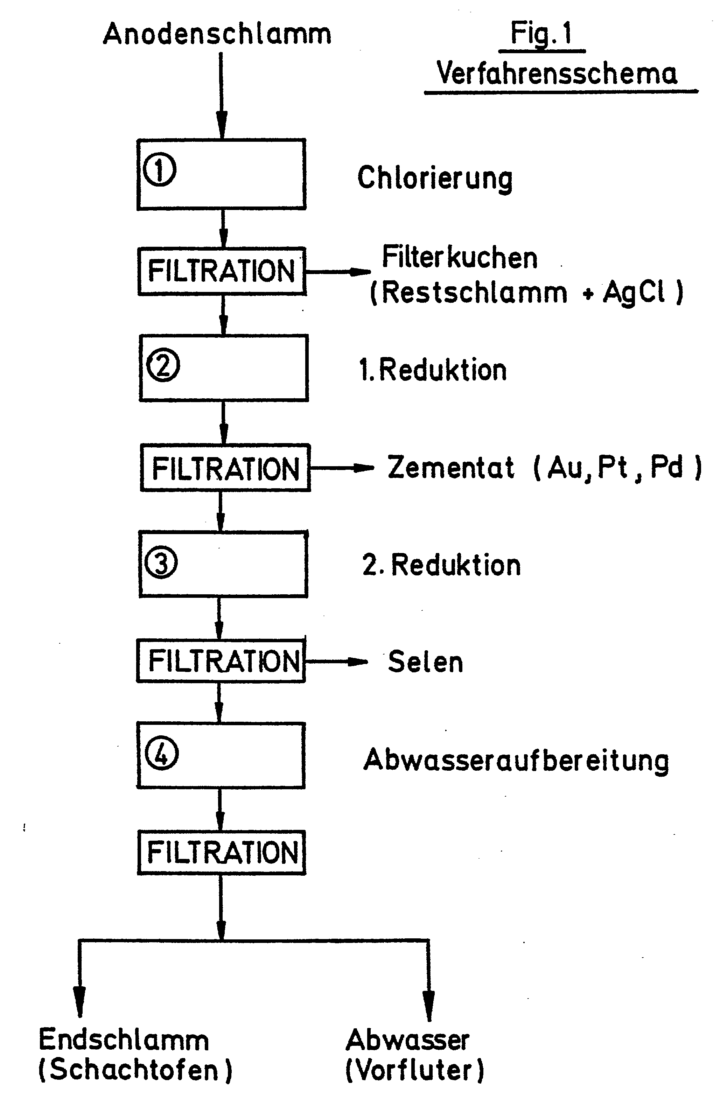

**Patentansprüche**

1. Hydrometallurgisches Verfahren zur Abtrennung und Anreicherung von Gold, Platin und Palladium und Gewinnung von Selen aus dem Anodenschlamm der Kupferelektrolysen und ähnlicher nichtmetallischer Stoffe, die außer Silber noch Blei, Gold, Platinmetalle, Se, Te, Sb, Sn, As, Bi, Cu, Ni, Zn, Fe, Sulfat, Chlorid, $BaSO_4$, Kieselsäure u.a. enthalten können, dadurch gekennzeichnet, daß das nach der Chlorierung des Schlammes mit $Cl_2$/HCl erhaltene, das gesamte Gold, Platin, Palladium und Selen des Anodenschlammes enthaltende Filtrat bei Zimmertemperatur mit einem Überschuß an Chlorgas versetzt wird, um das $Se^{IV}$ vollständig in $Se^{VI}$ umzuwandeln, anschließend bei Zimmertemperatur oder geringer Wärme mit entsprechenden Reduktionsmitteln das Gold gefällt und nach Zugabe einer definierten $Se^{IV}$-Menge auch die Platinmetalle reduktiv aus dieser sauren Lösung mitgefällt werden, wobei das so ausgefällte Edelmetallzementat filtriert wird, während das die Hauptmenge Selen enthaltende Zementat-Filtrat mit einer entsprechenden Menge an Salzsäure versetzt, stark erhitzt und nach kurzer Zeit durch Zusatz geeigneter Reduktionsmittel das Selen quantitativ gefällt und vom Filtrat abgetrennt wird.

2. Verfahren nach Anspruch 1, dadurch gekennzeichnet, daß das nach dem Chlorieren mit $Cl_2$/HCl erhaltene Filtrat durch die Zuführung von $Cl_2$-Gas bei Zimmertemperatur oxydiert wird, wobei $Se^{IV}$ in $Se^{VI}$ überführt wird, damit nach Zusatz geeigneter Reduktionsmittel die Edelmetalle ausgefällt werden, Selen aber in Lösung gehalten wird.

3. Verfahren nach Anspruch 1 und 2, dadurch gekennzeichnet, daß der Lösung vor der Abscheidung der Platinmetalle durch geeignete Reduktionsmittel eine definierte Menge an $Se^{IV}$ in Form einer Lösung zugeführt wird, die mindestens der Gesamtmenge an Platinmetallen entsprechen soll, damit die Platinmetalle aus der salzsauren Lösung reduktiv an Se-Metall mitgefällt und zusammen mit dem Gold quantitativ aus der Lösung als Zementat abgeschieden werden.

4. Verfahren nach Anspruch 1 und 2, dadurch gekennzeichnet, daß das die Hauptmenge Selen enthaltende Filtrat nach der Zementat-Filtration durch Zusatz von Salzsäure auf eine HCl-Konzentration von über 40 g/l eingestellt wird, das Filtrat nach längerem Erhitzen auf über 70°C mit einem geeigneten Reduktionsmittel versetzt und das Selen als schwarzes, kristallines Metall abgeschieden wird.

5. Verfahren nach Anspruch 1, 2, 3 und 4, dadurch gekennzeichnet, daß als geeignete Reduktionsmittel alle $Cu^{I}$-Verbindungen, wie z.B. Natriumkupfer(I)-Chlorid, Kupfer(I)-chlorid, sowie alle Stoffe, die in wäßriger, saurer, $CuCl_2$-haltiger Lösung $Cu^{I}$-Ionen bilden, wie z.B. Kupferstaub und Bronzestaub (Cu 80/Zn 20) eingesetzt werden können.

**Claims**

1. A hydrometallurgical process for the separation and enrichment of gold, platinum and palladium and for the extraction of selenium from the anode slime produced in the electrolytic refining of copper and from similar non-metallic substances, which may contain not only silver, but also lead, gold, platinum metals, Se, Te, Sb, Sn, As, Bi, Cu, Ni, Zn, Fe, sulfate, chloride, $BaSO_4$, silicic acid, etc., wherein the filtrate obtained after chlorination of the slime with $Cl_2$/HCl, which contains all the gold, platinum, palladium and selenium of the anode slime, is treated with excess chlorine gas at room temperature in order to fully convert $Se^{IV}$ into $Se^{VI}$, wherein the gold is subsequently precipitated by suitable reductants at room temperature or at slightly increased temperature and the platinum metals are reductively co-precipitated from this acid solution after addition of a defined quanitity of $Se^{IV}$, and wherein the precipitated precious metal cementate is filtered, whereas the filtrate of the cementate, which contains most of the selenium, is treated with a corresponding amount of hydrochloric acid and heated strongly so that after a short time selenium is quantitatively precipitated through the addition of suitable reductants and separated from the filtrate.

2. A process according to Claim 1, wherein the filtrate obtained after chlorination with $Cl_2$/HCl is oxidized at room temperature through the addition of $Cl_2$ gas, which converts $Se^{IV}$ into $Se^{VI}$ so that after addition of suitable reductants the precious metals are precipitated, while selenium remains in solution.

3. A process according to Claims 1 and 2, wherein a defined quantity of $Se^{IV}$ in the form of a solution, corresponding to at least the total amount of platinum metals, is added to the solution before precipitation of the platinum metals by suitable reductants so that the platinum metals bound to selenium metal are reductively co-precipitated from the hydrochloric acid solution and quantitatively separated from the solution together with the gold in cementate form.

4. A process according to Claims 1 and 2, wherein after filtration of the cementate the filtrate containing most of the selenium is adjusted to a HCl concentration above 40 g/l through the addition of hydrochloric acid, the filtrate is kept at a temperature of 70°C for a longer period of time and then treated with a suitable reductant, and the selenium is precipitated as black, crystalline metal.

5. A process according to Claims 1, 2, 3 and 4, wherein all $Cu^I$ compounds, such as sodium copper(I) chloride, copper(I) chloride, as well as all substances which form $Cu^I$ ions when in an aqueous, acid, $CuCl_2$-containing solution, such as copper powder and bronze powder (Cu 80/Zn 20), can be used as suitable reductants.

## Revendications

1. Procédé hydrométallurgique de séparation et de concentration d'or, de platine et de palladium ainsi que de récupération de sélénium à partir de la boue anodique d'électrolyse du cuivre et à partir de matières similaires non métalliques qui, outre de l'argent, peuvent contenir du plomb, de l'or, des métaux du groupe du platine, Se, Te, Sb, Sn, As, Bi, Cu, Ni, Zn, Fe, des sulfates, des chlorures, $BaSo_4$, de l'acide silicique, etc., caractérisé en ce que le filtrat obtenu après chloration de la boue au $Cl_2$/HCl et contenant la totalité de l'or, du platine, du palladium et du sélénium de la boue anodique, est additionné en excès de gaz chloré, à la température du laboratoire, afin de convertir complètement le $Se^{IV}$ en $Se^{VI}$, l'or étant ensuite précipité à l'aide de réducteurs appropriés, à la température du laboratoire ou en chauffant légèrement, et les métaux du groupe du platine étant de même précipités conjointement de cette solution acide, par réduction, après adjonction d'une quantité déterminée de $Se^{IV}$; le cémentat de métaux précieux ainsi obtenu étant alors filtré tandis que le filtrat de cémentat contenant la majeure partie du sélénium est additionné d'une quantité appropriée d'acide chlorhydrique, porté à une température élevée, le sélénium étant au bout d'un bref délai précipité quantitativement par adjonction d'un réducteur approprié et séparé du filtrat.

2. Procédé selon la revendication 1, caractérisé en ce que le filtrat obtenu après chloration au $Cl_2$/CHl est oxydé par adjonction de gaz chloré à la température du laboratoire, $Se^{IV}$ étant alors converti en $Se^{VI}$ pour permettre de précipiter les métaux précieux par adjonction d'un réducteur apporoprié, le sélénium restant à l'état de solution.

3. Procédé selon les revendications 1 et 2, caractérisé en ce que, avant séparation des métaux du groupe du platine par des réducteurs appropriés, une quantité déterminée de $Se^{IV}$ est ajoutée à la solution, sous forme de solution correspondant au moins à la quantité totale des métaux du groupe du platine, pour précipiter les métaux du groupe du platine de la solution chlorhydrique par réduction, conjointement au sélénium, et les séparer quantitativement de la solution avec l'or, sous forme de cémentat.

4. Procédé selon les revendications 1 et 2, caractérisé en ce que, après filtration du cémentat, le filtrat contenant la majeure partie du sélénium est porté, par addition d'acide chlorhydrique, à une concentration en HCl supérieure à 40 g/l, puis additionné d'un réducteur approprié après avoir été chauffé de façon prolongée à une température supérieure à 70°C, et le sélénium étant séparé sous forme de métal cristallin noir.

5. Procédé selon les revendications 1, 2, 3 et 4, caractérisé en ce que l'on peut utiliser comme réducteurs tous les composés cuivreux tels que chlorure de sodium et de cuivre, chlorure de cuivre ainsi que tous les corps qui, en solution aqueuse, acide, contenant du chlorure de cuivre, forment des ions cuivreux, p.ex. la poudre de cuivre et la poudre de bronze (Cu 80/Zn 20).

Fig. 1

Verfahrensschema